(19) Europäisches Patentamt
European Patent Office
Office européen des brevets

(11) **EP 4 014 159 B1**

(12) **EUROPEAN PATENT SPECIFICATION**

(45) Date of publication and mention
of the grant of the patent:
**06.11.2024   Bulletin 2024/45**

(21) Application number: **21832117.2**

(22) Date of filing: **03.05.2021**

(51) International Patent Classification (IPC):
*G06N 3/0455* (2023.01)     *G06N 3/082* (2023.01)
*G06N 3/088* (2023.01)       *H04N 19/102* (2014.01)
*H04N 19/147* (2014.01)      *H04N 19/176* (2014.01)
*H04N 19/192* (2014.01)      *H04N 19/196* (2014.01)
*G06N 3/0464* (2023.01)      *G06N 3/047* (2023.01)
*G06N 3/084* (2023.01)       *H04N 19/117* (2014.01)
*H04N 19/132* (2014.01)

(52) Cooperative Patent Classification (CPC):
**G06N 3/082; G06N 3/0455; G06N 3/088;**
**H04N 19/102; H04N 19/147; H04N 19/176;**
**H04N 19/192; H04N 19/196;** G06N 3/0464;
G06N 3/047; G06N 3/084; H04N 19/117;
H04N 19/132

(86) International application number:
**PCT/US2021/030413**

(87) International publication number:
**WO 2022/005594 (06.01.2022 Gazette 2022/01)**

(54) **METHOD AND APPARATUS FOR MULTI-RATE NEURAL IMAGE COMPRESSION WITH MICRO-STRUCTURED MASKS**

VERFAHREN UND VORRICHTUNG ZUR MULTIRATENKOMPRESSION NEURALER BILDER MIT MIKROSTRUKTURIERTEN MASKEN

PROCÉDÉ ET APPAREIL DE COMPRESSION D'IMAGE NEURONALE À DÉBITS MULTIPLES AVEC DES MASQUES MICROSTRUCTURÉS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.06.2020   US 202063045341 P**
**05.10.2020   US 202063087519 P**
**28.04.2021   US 202117242874**

(43) Date of publication of application:
**22.06.2022   Bulletin 2022/25**

(73) Proprietor: **Tencent America LLC**
**Palo Alto, California 94306 (US)**

(72) Inventors:
• **JIANG, Wei**
**Palo Alto, California 94306 (US)**
• **WANG, Wei**
**Palo Alto, California 94306 (US)**
• **LIU, Shan**
**Palo Alto, California 94306 (US)**

(74) Representative: **EP&C**
**P.O. Box 3241**
**2280 GE Rijswijk (NL)**

(56) References cited:
**US-A1- 2018 005 082     US-B1- 6 798 914**

• **DAVID ALEXANDRE ET AL: "An Autoencoder-based Learned Image Compressor: Description of Challenge Proposal by NCTU", ARXIV.ORG, CORNELL UNIVERSITY LIBRARY, 201 OLIN LIBRARY CORNELL UNIVERSITY ITHACA, NY 14853, 20 February 2019 (2019-02-20), XP081031130**

- JIANG WEI ET AL: "Structured Weight Unification and Encoding for Neural Network Compression and Acceleration", 2020 IEEE/CVF CONFERENCE ON COMPUTER VISION AND PATTERN RECOGNITION WORKSHOPS (CVPRW), IEEE, 14 June 2020 (2020-06-14), pages 3068 - 3076, XP033799151, DOI: 10.1109/CVPRW50498.2020.00365
- TONG CHEN; HAOJIE LIU; ZHAN MA; QIU SHEN; XUN CAO; YAO WANG: "Neural Image Compression via Non-Local Attention Optimization and Improved Context Modeling", ARXIV.ORG, CORNELL UNIVERSITY LIBRARY, 201 OLIN LIBRARY CORNELL UNIVERSITY ITHACA, NY 14853, 11 October 2019 (2019-10-11), 201 Olin Library Cornell University Ithaca, NY 14853
, XP081514975
- ANDREA K; CHRISTINE LEITNER; HERBERT LEITOLD; ALEXANDER PROSSER: "Advances in Databases and Information Systems", vol. 11366 Chap.45, 26 May 2019, SPRINGER INTERNATIONAL PUBLISHING
, Cham
, ISBN: 978-3-319-10403-4, article NAKANISHI KEN M.; MAEDA SHIN-ICHI; MIYATO TAKERU; OKANOHARA DAISUKE: "Neural Multi-scale Image Compression", pages: 718 - 732, XP047508336, 032682, DOI: 10.1007/978-3-030-20876-9_45
- DESHMUKH KUNAL RAJAN: "Image Compression Using Neural Networks", SAN JOSE STATE UNIVERSITY, vol. 666, 9 May 2019 (2019-05-09), pages 1 - 48, XP055895912, DOI: 10.31979/etd.h8mt-65ct

## Description

### CROSS-REFERENCE TO RELATED APPLICATIONS

This application claims the benefit of priority to U.S. Patent Application No. 17/242,874, filed on April 28, 2021, which is based on and claims priority to U.S. Provisional Patent Application No. 63/045,341, filed on June 29, 2020, and U.S. Provisional Patent Application No. 63/087,519, filed on October 5, 2020.

### BACKGROUND

Standard groups and companies have been actively searching for potential needs for standardization of future video coding technology. These standard groups and companies have focused on artificial intelligence (AI)-based end-to-end neural image compression (NIC) using deep neural networks (DNNs). The success of this approach has brought more and more industrial interest in advanced neural image and video compression methodologies.

David Alexandre et al: "An autoencoder-based learned image compressor: description of challenge proposal by NCTU", arXiv.org, 20 February 2019 (2019-02-20), proposes a lossy image compression system using the deep-learning autoencoder structure to participate in the Challenge on Learned Image Compression (CLIC) 2018. The autoencoder therein uses the residual blocks with skip connections to reduce the correlation among image pixels and condense the input image into a set of feature maps, a compact representation of the original image.

Jiang Wei et al: "Structured weight unification and encoding for neural network compression and acceleration", 2020 IEEE/CVF Conference on computer vision and pattern recognition workshops (CVPRW), IEEE, 14 June 2020 (2020-06-14), pages 3068-3076, investigates structured j oint weight unification and weight encoding to compress deep neural network models for reduced storage and computation. A structured weight unification method is proposed therein, where weight coefficients are unified according to a hardware-friendly structure, so that the unified weights can be effectively encoded and the inference computation can be accelerated.

Flexible bitrate control remains a challenging issue for previous NIC methods. Conventionally, it may include training multiple model instances targeting each desired trade-off between a rate and a distortion (a quality of compressed images) individually. All these multiple model instances may need to be stored and deployed on a decoder side to reconstruct images from different bitrates. This may be prohibitively expensive for many applications with limited storage and computing resources.

### SUMMARY

The invention is set out in the appended independent claims. Preferred embodiments are set out in the appended dependent claims.

### BRIEF DESCRIPTION OF THE DRAWINGS

FIG. 1 is a diagram of an environment in which methods, apparatuses and systems described herein may be implemented.
FIG. 2 is a block diagram of example components of one or more devices of FIG. 1.
FIG. 3 is a block diagram of a test apparatus for multi-rate neural image compression, during a test stage.
FIG. 4A is a block diagram of a training apparatus for multi-rate neural image compression, during a training stage.
FIG. 4B is a block diagram of a training apparatus for multi-rate neural image compression, during a training stage.
FIG. 4C is a block diagram of a training apparatus for multi-rate neural image compression, during a training stage.
FIG. 5 is a flowchart of a method of multi-rate neural image compression.
FIG. 6 is a block diagram of an apparatus for multi-rate neural image compression.
FIG. 7 is a flowchart of a method of multi-rate neural image decompression.
FIG. 8 is a block diagram of an apparatus for multi-rate neural image decompression.

### DETAILED DESCRIPTION

The disclosure describes a method and an apparatus for compressing an input image, using a multi-rate NIC framework in which only one NIC model instance is used to achieve image compression at multiple bitrates with guidance from multiple binary masks targeting different bitrates.

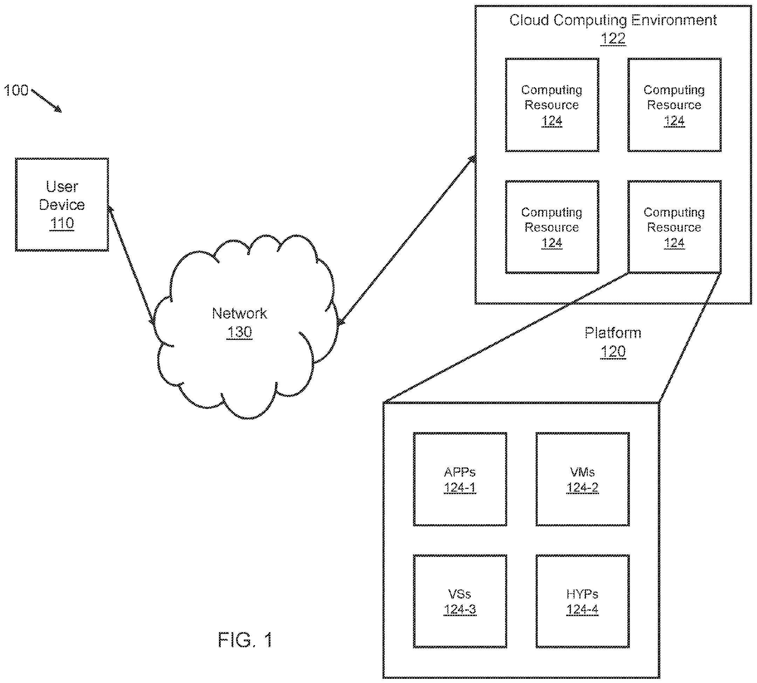

FIG. 1 is a diagram of an environment 100 in which methods, apparatuses and systems described herein may be implemented, according to embodiments.

As shown in FIG. 1, the environment 100 may include a user device 110, a platform 120, and a network 130. Devices of the environment 100 may interconnect via wired connections, wireless connections, or a combination of wired and wireless connections.

The user device 110 includes one or more devices capable of receiving, generating, storing, processing, and/or providing information associated with platform 120. For example, the user device 110 may include a computing device (e.g., a desktop computer, a laptop computer, a tablet computer, a handheld computer, a smart speaker, a server, etc.), a mobile phone (*e.g.,* a smart phone, a radiotelephone, etc.), a wearable device (*e.g.,* a pair of smart glasses or a smart watch), or a similar device. In some implementations, the user device 110 may receive information from and/or transmit information to the platform 120.

The platform 120 includes one or more devices as described elsewhere herein. In some implementations, the platform 120 may include a cloud server or a group of cloud servers. In some implementations, the platform 120 may be designed to be modular such that software components may be swapped in or out. As such, the platform 120 may be easily and/or quickly reconfigured for different uses.

In some implementations, as shown, the platform 120 may be hosted in a cloud computing environment 122. Notably, while implementations described herein describe the platform 120 as being hosted in the cloud computing environment 122, in some implementations, the platform 120 may not be cloud-based (i.e., may be implemented outside of a cloud computing environment) or may be partially cloud-based.

The cloud computing environment 122 includes an environment that hosts the platform 120. The cloud computing environment 122 may provide computation, software, data access, storage, etc. services that do not require end-user (e.g., the user device 110) knowledge of a physical location and configuration of system(s) and/or device(s) that hosts the platform 120. As shown, the cloud computing environment 122 may include a group of computing resources 124 (referred to collectively as "computing resources 124" and individually as "computing resource 124").

The computing resource 124 includes one or more personal computers, workstation computers, server devices, or other types of computation and/or communication devices. In some implementations, the computing resource 124 may host the platform 120. The cloud resources may include compute instances executing in the computing resource 124, storage devices provided in the computing resource 124, data transfer devices provided by the computing resource 124, etc. In some implementations, the computing resource 124 may communicate with other computing resources 124 via wired connections, wireless connections, or a combination of wired and wireless connections.

As further shown in FIG. 1, the computing resource 124 includes a group of cloud resources, such as one or more applications ("APPs") 124-1, one or more virtual machines ("VMs") 124-2, virtualized storage ("VSs") 124-3, one or more hypervisors ("HYPs") 124-4, or the like.

The application 124-1 includes one or more software applications that may be provided to or accessed by the user device 110 and/or the platform 120. The application 124-1 may eliminate a need to install and execute the software applications on the user device 110. For example, the application 124-1 may include software associated with the platform 120 and/or any other software capable of being provided via the cloud computing environment 122. In some implementations, one application 124-1 may send/receive information to/from one or more other applications 124-1, via the virtual machine 124-2.

The virtual machine 124-2 includes a software implementation of a machine (e.g., a computer) that executes programs like a physical machine. The virtual machine 124-2 may be either a system virtual machine or a process virtual machine, depending upon use and degree of correspondence to any real machine by the virtual machine 124-2. A system virtual machine may provide a complete system platform that supports execution of a complete operating system ("OS"). A process virtual machine may execute a single program, and may support a single process. In some implementations, the virtual machine 124-2 may execute on behalf of a user (e.g., the user device 110), and may manage infrastructure of the cloud computing environment 122, such as data management, synchronization, or long-duration data transfers.

The virtualized storage 124-3 includes one or more storage systems and/or one or more devices that use virtualization techniques within the storage systems or devices of the computing resource 124. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

The hypervisor 124-4 may provide hardware virtualization techniques that allow multiple operating systems (e.g., "guest operating systems") to execute concurrently on a host computer, such as the computing resource 124. The hypervisor 124-4 may present a virtual operating platform to the guest operating systems, and may manage the execution of the guest operating systems. Multiple instances of a variety of operating systems may share virtualized hardware resources.

The network 130 includes one or more wired and/or wireless networks. For example, the network 130 may include a cellular network (e.g., a fifth generation (5G) network, a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, or the like, and/or a combination of these or other types of networks.

The number and arrangement of devices and networks shown in FIG. 1 are provided as an example. In practice, there may be additional devices and/or networks, fewer devices and/or networks, different devices and/or networks, or differently arranged devices and/or networks than those shown in FIG. 1. Furthermore, two or more devices shown in FIG. 1 may be implemented within a single device, or a single device shown in FIG. 1 may be implemented as multiple, distributed devices. Additionally, or alternatively, a set of devices (*e.g.,* one or more devices) of the environment 100 may perform one or more functions described as being performed by another set of devices of the environment 100.

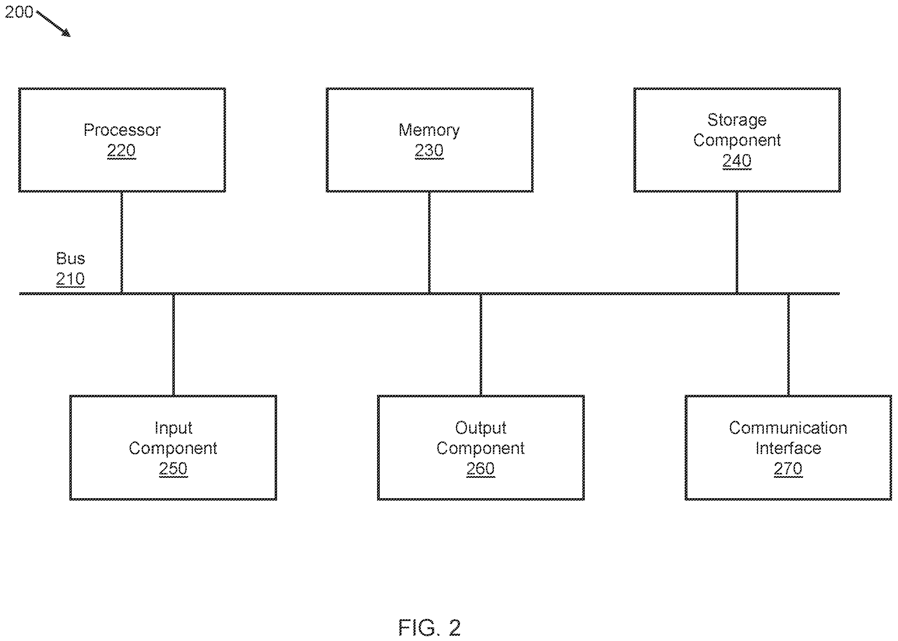

FIG. 2 is a block diagram of example components of one or more devices of FIG. 1.

A device 200 may correspond to the user device 110 and/or the platform 120. As shown in FIG. 2, the device 200 may include a bus 210, a processor 220, a memory 230, a storage component 240, an input component 250, an output component 260, and a communication interface 270.

The bus 210 includes a component that permits communication among the components of the device 200. The processor 220 is implemented in hardware, firmware, or a combination of hardware and software. The processor 220 is a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some implementations, the processor 220 includes one or more processors capable of being programmed to perform a function. The memory 230 includes a random access memory (RAM), a read only memory (ROM), and/or another type of dynamic or static storage device (e.g., a flash memory, a magnetic memory, and/or an optical memory) that stores information and/or instructions for use by the processor 220.

The storage component 240 stores information and/or software related to the operation and use of the device 200. For example, the storage component 240 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

The input component 250 includes a component that permits the device 200 to receive information, such as via user input (e.g., a touch screen display, a keyboard, a keypad, a mouse, a button, a switch, and/or a microphone). Additionally, or alternatively, the input component 250 may include a sensor for sensing information (e.g., a global positioning system (GPS) component, an accelerometer, a gyroscope, and/or an actuator). The output component 260 includes a component that provides output information from the device 200 (e.g., a display, a speaker, and/or one or more light-emitting diodes (LEDs)).

The communication interface 270 includes a transceiver-like component (e.g., a transceiver and/or a separate receiver and transmitter) that enables the device 200 to communicate with other devices, such as via a wired connection, a wireless connection, or a combination of wired and wireless connections. The communication interface 270 may permit the device 200 to receive information from another device and/or provide information to another device. For example, the communication interface 270 may include an Ethernet interface, an optical interface, a coaxial interface, an infrared interface, a radio frequency (RF) interface, a universal serial bus (USB) interface, a Wi-Fi interface, a cellular network interface, or the like.

The device 200 may perform one or more processes described herein. The device 200 may perform these processes in response to the processor 220 executing software instructions stored by a non-transitory computer-readable medium, such as the memory 230 and/or the storage component 240. A computer-readable medium is defined herein as a non-transitory memory device. A memory device includes memory space within a single physical storage device or memory space spread across multiple physical storage devices.

Software instructions may be read into the memory 230 and/or the storage component 240 from another computer-readable medium or from another device via the communication interface 270. When executed, software instructions stored in the memory 230 and/or the storage component 240 may cause the processor 220 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in FIG. 2 are provided as an example. In practice, the device 200 may include additional components, fewer components, different components, or differently arranged components than those shown in FIG. 2. Additionally, or alternatively, a set of components (e.g., one or more components) of the device 200 may perform one or more functions described as being performed by another set of components of the device 200.

A method and an apparatus for multi-rate neural image compression will now be described in detail.

This disclosure proposes a multi-rate NIC framework for learning and deploying only one NIC model instance that supports multi-rate image compression. A set of binary masks is learned, one for each targeted bitrate, to guide a decoder in a reconstruction stage to recover images from different bitrates.

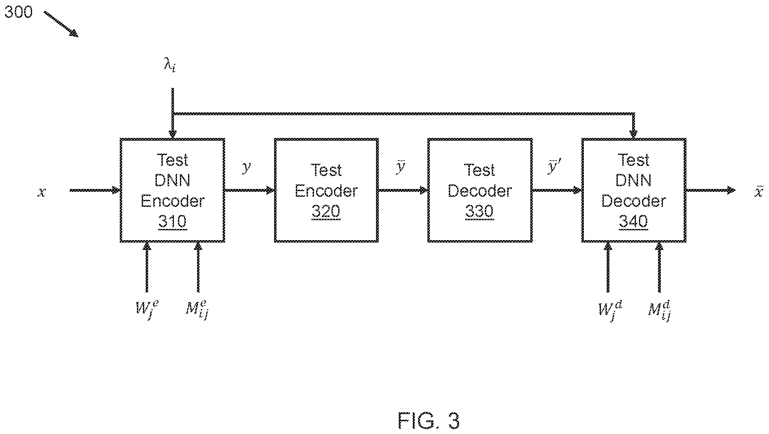

FIG. 3 is a block diagram of a test apparatus 300 for multi-rate neural image compression, during a test stage, according to embodiments.

Referring to FIG. 3, the test apparatus 300 includes a test DNN encoder 310, a test encoder 320, a test decoder 330 and a test DNN decoder 340.

Given an input image $x$ of size (h,w,c), where h, w, c are the height, width, and a number of channels, respectively, a target of the test stage of an NIC workflow can be described as follows.

The test DNN encoder 310 encodes the input image $x$ to obtain an encoded representation $y$, using a DNN.

The test encoder 320 encodes the obtained encoded representation $y$ to obtain a compressed representation $\bar{y}$ that is compact for storage and transmission. The obtained encoded representation $y$ may encoded through quantization and entropy encoding.

The test decoder 330 decodes the obtained compressed representation $\bar{y}$ to obtain a recovered representation $\bar{y}'$. The obtained compressed representation $\bar{y}$ may be decoded through decoding and dequantization.

The test DNN decoder 340 decodes the obtained recovered representation $\bar{y}'$ to reconstruct a reconstructed image $\bar{x}$, using a DNN. The reconstructed image $\bar{x}$ should be similar to the original input image x.

There is not any restriction on network structures of the test DNN encoder 310 and the test DNN decoder 340. Also, there is not any restriction on methods (quantization and entropy coding) that are used by the test encoder 320 and the test decoder 330.

To learn an NIC model, there may be a need to balance two competing desires: better reconstruction quality versus less bit consumption. A loss function $D(x, \bar{x})$ is used to measure a reconstruction error, which is called a distortion loss, such as peak signal-to-noise ratio (PSNR) and/or structural similarity index measure (SSIM). A rate loss $R(\bar{y})$ is computed to measure a bit consumption of the compressed representation $\bar{y}$. Therefore, a trade-off hyperparameter $\lambda$ is used to optimize a joint rate-distortion (R-D) loss:

$$L(x, \bar{x}, \bar{y}) = D(x, \bar{x}) + \lambda R(\bar{y}) \qquad (1)$$

Training with a large hyperparameter $\lambda$ results in compression models with smaller distortion but more bit consumption, and vice versa. Traditionally, for each value of a predefined hyperparameter $\lambda$, an NIC model instance will be trained, which will not work well for other values of the predefined hyperparameter $\lambda$. Therefore, to achieve multiple bitrates of a compressed stream, traditional methods may require training and storing multiple model instances.

The method and apparatus for multi-rate neural image compression use one single trained model instance of an NIC network, and use a set of binary masks to guide the NIC model instance to generate different compressed representations as well as a corresponding reconstructed image, each mask targeting a different value of a hyperparameter $\lambda$.

In detail, $\{W_j^e\}$ and $\{W_j^d\}$ denote a set of weight coefficients of an encoder and a decoder part of the NIC model instance, respectively, where $\{W_j^e\}$ and $\{W_j^d\}$ are the weight coefficients of a $j$-th layer of the test DNN encoder 310 and the test DNN decoder 340, respectively. $\lambda_{1, ..., }\lambda_N$ denote N hyperparameters, and $\bar{y}_i$ and $\bar{x}_i$ denote a compressed representation and a reconstructed image that correspond to a hyperparameter $\lambda_i$. $M_{ij}^e$ and $M_{ij}^d$ denote binary masks for the $j$-th layer of the test DNN encoder 310 and the test DNN decoder 340, respectively, corresponding to the hyperparameter $\lambda_i$. Weights $W_j^e$ is a 5-dimensional (5D) tensor with size ($c_1$, $k_1$, $k_2$, $k_3$, $c_2$). An input of a layer is a 4-dimensional (4D) tensor A of size ($h_1$, $w_1$, $d_1$, $c_1$), and an output of the layer is a 4D tensor B of size ($h_2$, $w_2$, $d_2$, $c_2$). The sizes $c_1$, $k_1$, $k_2$, $k_3$, $c_2$, $h_1$, $w_1$, $d_1$, $h_2$, $w_2$, $d_2$ are integer numbers greater or equal to 1. When any of the sizes $c_1$, $k_1$, $k_2$, $k_3$, $c_2$, $h_1$, $w_1$, $d_1$, $h_2$, $w_2$, $d_2$ is the number 1, the corresponding tensor reduces to a lower dimension. Each item in each tensor is a floating number. The parameters $h_1$, $w_1$ and $d_1$ ($h_2$, $w_2$ and $d_2$) are height, weight and depth of the input tensor A (output tensor B). The parameter $c_1$ ($c_2$) is a number of input (output) channels. The parameters $k_1$, $k_2$ and $k_3$ are sizes of convolution kernels corresponding to height, weight and depth axes, respectively. The output tensor B is computed through a convolution operation O, based on the input tensor A, the masks $M_{ij}^e$ and the weights $W_j^e$. That is, the output tensor B is computed as the input tensor A convolving with masked weights $W_{ij}^{e\prime} = W_j^e \cdot M_{ij}^e$, where $\cdot$ is element-wise multiplication. Similarly, for the weights $W_j^d$, their output tensor B is computed through a convolution operation of the input tensor A with masked weights $W_{ij}^{d\prime} = W_j^d \cdot M_{ij}^d$.

Referring to FIG. 3, the test DNN encoder 310 includes only one model instance with the weights $\{W_j^e\}$, and the test DNN decoder 340 includes only one model instance with the weights $\{W_j^d\}$. Given the input image x, and given the target hyperparameter $\lambda_i$, the test DNN encoder 310 selects the set of the encoding masks $\{M_{ij}^e\}$ to compute the masked weights $\{W_{ij}^{e\prime}\}$, which are used by the test DNN encoder 310 to compute the DNN-encoded representation y. Then, the test encoder 320 computes the compressed representation $\overline{y}$ in an encoding process. Based on the compressed representation $\overline{y}$, the test decoder 330 computes the recovered representation $\overline{y}$' through a decoding process. Using the hyperparameter $\lambda_i$, the test DNN decoder 340 selects the set of the decoding masks $\{M_{ij}^d\}$ to compute the masked weights $\{W_{ij}^{d\prime}\}$, which are used by the test DNN decoder 340 to compute the reconstructed image $\overline{x}$, based on the recovered representation $\overline{y}$'.

A shape of the weight $W_j^e$ or $W_j^d$ (so as the mask $M_{ij}^e$ or $M_{ij}^d$) can be changed to correspond to a convolution of a reshaped input with the reshaped weight $W_j^e$ or $W_j^d$ to obtain the same output. In detail, there may be two configurations. First, the 5D weight tensor may be reshaped into a 3D tensor of size ($c_1', c_2'$, k), where $c_1' \times c_2' \times k = c_1 \times c_2 \times k_1 \times k_2 \times k_3$. For example, a configuration may be $c_1' = c_1$, $c_2' = c_2$, k = $k_1 \times k_2 \times k_3$. Second, the 5D weight tensor may be reshaped into a 2D matrix of size ($c_1', c_2'$), where $c_1' \times c_2' = c_1 \times c_2 \times k_1 \times k_2 \times k_3$. For example, configurations may be $c_1' = c_1$, $c_2' = c_2 \times k_1 \times k_2 \times k_3$, or $c_2' = c_2$, $c_1' = c_1 \times k_1 \times k_2 \times k_3$.

A desired micro-structure of the masks may be designed to align with an underlying GEMM matrix multiplication process of how the convolution operation is implemented so that an inference computation of using the masked weight coefficients can be accelerated. In an example, block-wise micro-structures may be used for the masks (so as the masked weight coefficients) of each layer in the 3D reshaped weight tensor or the 2D reshaped weight matrix. For the case of the reshaped 3D weight tensor, a mask may be partitioned into blocks of size ($g_i$, $g_o$, $g_k$), and for the case of reshaped 2D weight matrix, a mask may be partitioned into blocks of size ($g_i$, $g_o$). All items in a block of a mask will have the same binary value 1 or 0. That is, weight coefficients are masked out in a block-wise micro-structured fashion.

A goal is to learn a set of micro-structured encoding masks $\{M_{ij}^e\}$ and micro-structured decoding masks $\{M_{ij}^d\}$, each of the masks $M_{ij}^e$ and $M_{ij}^d$ targeting each of hyperparameters $\lambda_i$. A progressive multi-stage training framework may achieve this goal.

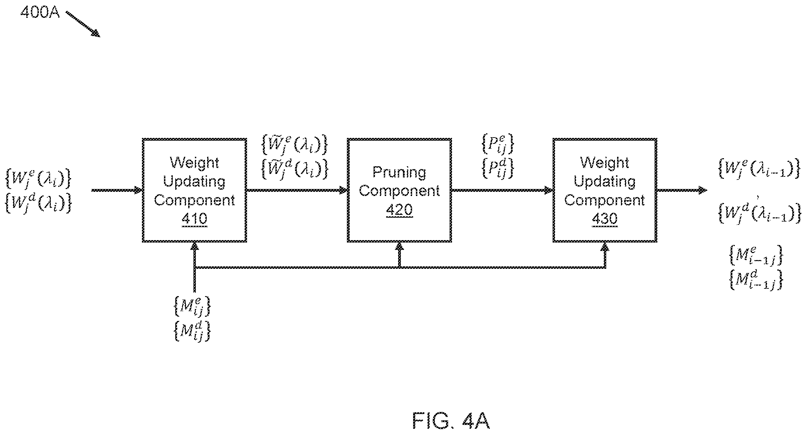

In detail, assume that the hyperparameters $\lambda_1,..., \lambda_i$ are ranked in ascending order, and correspond to masks that generate compressed representations with increasing distortion (decreasing quality) and decreasing rate loss (increasing bitrates). Two different training frameworks may be used to learn a model instance and the masks, i.e., $\{W_j^e\}, \{W_j^d\}, \{M_{ij}^e\}, \{M_{ij}^d\}$, as illustrated in FIG. 4A.

An overall workflow of the first training framework is shown in FIG. 4A.

FIG. 4A is a block diagram of a training apparatus 400A for multi-rate neural image compression, during a training stage, according to embodiments.

Referring to FIG. 4A, the training apparatus 400A includes a weight updating component 410, a pruning component 420 and a weight updating component 430.

Assume that a current target is to train the masks targeting a hyperparameter $\lambda_{i-1}$, a current model instance has weights $\{W_j^e(\lambda_i)\}, \{W_j^d(\lambda_i)\}$, and the masks are denoted $\{M_{ij}^e\}, \{M_{ij}^d\}$. The goal is to obtain masks $\{M_{i-1j}^e\}, \{M_{i-1j}^d\}$, as well as updated weights $\{W_j^e(\lambda_{i-1})\}, \{W_j^d(\lambda_{i-1})\}$.

In a first step, the weight coefficients among the weights $\{W_j^e(\lambda_i)\}, \{W_j^d(\lambda_i)\}$ that are masked by $\{M_{ij}^e\}, \{M_{ij}^d\}$, respectively, are fixed or set. For example, if an entry in the mask $M_{ij}^e$ is 1, the corresponding weight $W_j^e(\lambda_i)$ is fixed.

Then, the weight updating component 410 updates remaining unmasked weight coefficients among the weights $W_j^e(\lambda_i)\}$ and $\{W_j^d(\lambda_i)\}$ through backpropagation, using an R-D loss of Equation (1) targeting at a first hyperparameter $\lambda_1$, into updated weights $\{\widetilde{W}_j^e(\lambda_i)\}$ and $\{\widetilde{W}_j^d(\lambda_i)\}$. Multiple epoch iterations may be performed to optimize the R-D loss in this weight update process, e.g., until reaching a maximum iteration number or until a loss converges.

After that, a micro-structured weight pruning process is performed. In this process, using the updated weights $\{\widetilde{W}_j^e(\lambda_i)\}$ and $\{\widetilde{W}_j^d(\lambda_i)\}$ as inputs, for the unfixed weight coefficients among the updated weights $\{\widetilde{W}_j^e(\lambda_i)\}$ and $\{\widetilde{W}_j^d(\lambda_i)\}$, the pruning component 420 obtains or computes a pruning loss $L_s(b)$ (e.g., the $L_1$ or $L_2$ norm of the weights in a block) for each micro-structured block b (3D block for 3D reshaped weight tensor or 2D block for 2D reshaped weight matrix). The pruning component 420 ranks these micro-structured blocks in ascending order, and prunes the blocks (i.e., by setting corresponding weights in the pruned blocks as 0) top down from a ranked list until a stop criterion is reached.

For example, given a validation dataset $S_{val}$, the NIC model with the updated weights $\{\widetilde{W}_j^e(\lambda_i)\}, \{\widetilde{W}_j^d(\lambda_i)\}$ and the masks $\{M_{ij}^e\}, \{M_{ij}^d\}$ generates a distortion loss $D_{val}(\{\widetilde{W}_j^e(\lambda_i)\}, \{\widetilde{W}_j^d(\lambda_i)\}, \{M_{ij}^e\}, \{M_{ij}^d\})$. As more and more micro-blocks are pruned, this distortion loss will gradually increase. The stop criterion can be a tolerable percentage threshold that allows the distortion loss to increase.

The pruning component 420 generates a set of binary pruning masks $\{P_{ij}^e\}$ and $\{P_{ij}^d\}$, where an entry in the mask $P_{ij}^e$ or $P_{ij}^d$ being 0 means the corresponding weight $W_j^e$ or $W_j^d$ is pruned.

Then, the weight updating component 430 fixes additional unfixed weights among the updated weights $\{\widetilde{W}_j^e(\lambda_i)\}$ and $\{\widetilde{W}_j^d(\lambda_i)\}$ that are masked by the masks $\{P_{ij}^e\}$ and $\{P_{ij}^d\}$, and updates remaining weights among the updated weights $\{\widetilde{W}_j^e(\lambda_i)\}$ and $\{\widetilde{W}_j^d(\lambda_i)\}$ that are not masked by either the masks $\{P_{ij}^e\}, \{P_{ij}^d\}$ or $\{M_{ij}^e\}, \{M_{ij}^d\}$, by regular backpropagation to optimize the overall R-D loss of Equation (1) targeting the hyperparameter $\lambda_{i-1}$. Multiple epoch iterations may be performed to optimize the R-D loss in this weight update process, e.g., until reaching a maximum iteration number or until the loss converges. Then, the weight updating component 430 obtains or computes corresponding masks $\{M_{i-1j}^e\}$ and $\{M_{i-1j}^d\}$ as: $M_{i-1j}^e = M_{ij}^e \cup P_{ij}^e$ and $M_{i-1j}^d = M_{ij}^d \cup P_{ij}^d$. That is, non-pruned entries among the masks $P_{ij}^e$ $(P_{ij}^d)$ that are non-masked in the masks $M_{ij}^e$ $(M_{ij}^d)$ will be additionally set to 1 as being masked in $M_{i-1j}^e (M_{i-1j}^d)$. Also, the weight updating component 430 outputs the updated weights

$\{W_j^e(\lambda_{i\text{-}1})\}$ and $\{W_j^d(\lambda_{i\text{-}1})\}$. The final updated weights $\{W_j^e(\lambda_1)\}$ and $\{W_j^d(\lambda_1)\}$ are the final output weights $\{W_j^e\}$ and $\{W_j^d\}$ for the learned model instance.

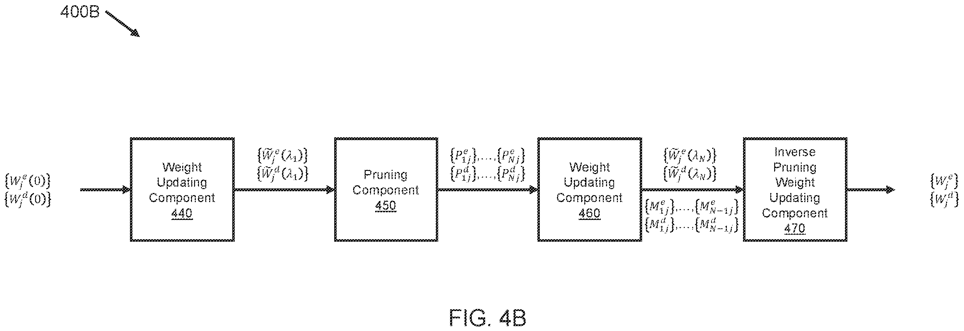

An overall workflow of the second training framework is shown in FIG. 4B.

FIG. 4B is a block diagram of a training apparatus 400B for multi-rate neural image compression, during a training stage, according to embodiments.

Referring to FIG. 4B, the training apparatus 400B includes a weight updating component 440, a pruning component 450, a weight updating component 460, and an inverse pruning weight updating component 470.

Given a set of initial weights $\{W_j^e(0)\}$ and $\{W_j^d(0)\}$ (e.g., randomly initialized according to some distributions), the weight updating component 440 learns a set of model weights $\{\widetilde{W}_j^e(\lambda_1)\}, \{\widetilde{W}_j^d(\lambda_1)\}$ through a weight update process using regular backpropagation using a training dataset $S_{tr}$, by optimizing the R-D loss of Equation (1) targeting a hyperparameter $\lambda_1$.

After that, the pruning component 450 performs a micro-structured pruning process based on the model weights $\{\widetilde{W}_j^e(\lambda_1)\}, \{\widetilde{W}_j^d(\lambda_1)\}$. In this micro-structured pruning process, the pruning component 450 partitions each reshaped 3D weight tensor or 2D weight matrix into micro-blocks (3D blocks for a 3D reshaped weight tensor or 2D blocks for a 2D reshaped weight matrix), and obtains or computes a pruning loss $L_s(b)$ (e.g., an $L_1$ or $L_2$ norm of weights in a block) for each micro-structured block b.

The pruning component 450 ranks these micro-structured blocks in ascending order, and prunes the blocks (i.e., by setting the corresponding weights in the pruned blocks as 0) from top to down on a ranked list to target each of the hyperparameters $\lambda_1$, ..., $\lambda_N$ in the following way. Assuming the current weights are $\{\widetilde{W}_j^e(\lambda_i)\}, \{\widetilde{W}_j^d(\lambda_i)\}$, the pruning component 450 obtains corresponding binary pruning masks $\{P_{ij}^e\}$ and $\{P_{ij}^d\}$, in which an entry in the mask $P_{ij}^e$ or $P_{ij}^d$ being 0 means the corresponding weight among the weights $\widetilde{W}_j^e(\lambda_i)$ or $\widetilde{W}_j^d(\lambda_i)$ is pruned. The pruning component 450 further obtains the pruning masks $\{P_{i+1j}^e\}$ and $\{P_{i+1j}^d\}$ for $\lambda_{i+1}$, to obtain updated weights $\{\widetilde{W}_j^e(\lambda_{i+1})\}, \{\widetilde{W}_j^d(\lambda_{i+1})\}$. To achieve this goal, in the pruning process, the pruning component 450 fixes weight coefficients among the weights $\widetilde{W}_j^e(\lambda_i)$ or $\widetilde{W}_j^d(\lambda_i)$ that are masked to be pruned by the masks $\{P_{ij}^e\}$ and $\{P_{ij}^d\}$, continues to prune down, in the ranked list, remaining unpruned micro-blocks until reaching a stop criterion for the hyperparameter $\lambda_{i+1}$. For example, given a validation dataset $S_{val}$, the NIC model with the weights $\{\widetilde{W}_j^e(\lambda_i)\}, \{\widetilde{W}_j^d(\lambda_i)\}$ generates a distortion loss $D_{val}(\{\widetilde{W}_j^e(\lambda_i)\}, \{\widetilde{W}_j^d(\lambda_i)\})$. As more and more micro-blocks are pruned, this distortion loss will gradually increase. The stop criterion can be a tolerable percentage threshold that we allow the distortion loss to increase. Then, the pruning component 450 generates pruning masks $\{P_{i+1j}^e\}$ and $\{P_{i+1j}^d\}$ by adding these additional pruned micro-blocks into the masks $\{P_{ij}^e\}$ and $\{P_{ij}^d\}$.

Then, in a weight update process, the weight updating component 460 fixes all these pruned micro-blocks masked by the masks $\{P_{i+1j}^e\}$ and $\{P_{i+1j}^d\}$, and updates remaining unfixed weights, using regular backpropagation to optimize the R-D loss of Equation (1) targeting the hyperparameter $\lambda_{i+1}$, to generate a set of updated weights $\{\widetilde{W}_j^e(\lambda_{i+1})\}, \{\widetilde{W}_j^d(\lambda_{i+1})\}$. By repeating the above pruning and weight update processes for each of the hyperparameters $\lambda_1,..., \lambda_N$, the pruning component 450 obtains the set of pruning masks $\{P_{1j}^e\}, ...,\{P_{Nj}^e\}, \{P_{1j}^d\}, ..., \{P_{Nj}^d\}$, and the weight updating component 460 updates final updated weights

$\{\widetilde{W}_j^e(\lambda_N)\}, \{\widetilde{W}_j^d(\lambda_N)\}$. The pruning masks $\{P_{ij}^e\}$ and $\{P_{ij}^d\}$ are directly used as the model masks $\{M_{ij}^e\}$ and $\{M_{ij}^d\}$ for the hyperparameter $\lambda_i$.

After that, the inverse pruning weight updating component 470 trains the weights $\{W_j^e\}$ and $\{W_j^d\}$ through an inverse pruning weight update process based on the final updated weights $\{\widetilde{W}_j^e(\lambda_N)\}, \{\widetilde{W}_j^d(\lambda_N)\}$ and the model masks $\{M_{1j}^e\},\ldots,\{M_{ij}^e\}$ and $\{M_{1j}^d\},\ldots,\{M_{ij}^d\}$ in the following way. Assuming the current weights $\{\widetilde{W}_j^e(\lambda_i)\}, \{\widetilde{W}_j^d(\lambda_i)\}$ are obtained, and weight coefficients among the weights $\{\widetilde{W}_j^e(\lambda_i)\}, \{\widetilde{W}_j^d(\lambda_i)\}$ that are masked as 1 in the masks $\{M_{ij}^e\}$ and $\{M_{ij}^d\}$ are fixed, weight coefficients that are masked as 1 in the masks $\{M_{i-1j}^e\}$ and $\{M_{i-1j}^d\}$ but 0 in the masks $\{M_{ij}^e\}$ and $\{M_{ij}^d\}$ are filled in. These weights can be filled with their original values at a time they are pruned in the pruning process, or they can be filled with randomly initialized values. Then, the inverse pruning weight updating component 470 updates these newly-filled weights with regular backpropagation by optimizing the R-D loss of Equation (1) targeting the hyperparameter $\lambda_{i-1}$. This results in the updated weights $\{\widetilde{W}_j^e(\lambda_{i-1})\}, \{\widetilde{W}_j^d(\lambda_{i-1})\}$. This process is repeated until last weights $\{\widetilde{W}_j^e(\lambda_1)\}$, $\{\widetilde{W}_j^d(\lambda_1)\}$. $\{\widetilde{W}_j^e(\lambda_1)\}, \{\widetilde{W}_j^d(\lambda_1)\}$ are obtained as final output $\{W_j^e\}$ and $\{W_j^d\}$.

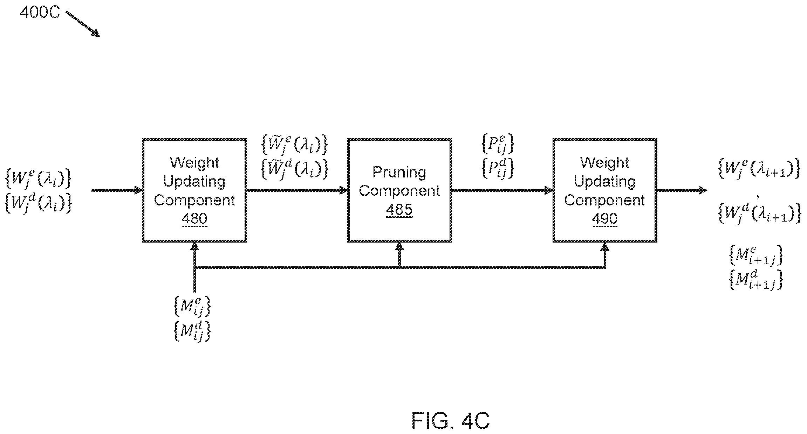

In embodiments, a prune-and-grow (PnG) training framework may be used to learn binary masks. FIG. 4C gives an overall workflow of this PnG training framework.

FIG. 4C is a block diagram of a training apparatus 400C for multi-rate neural image compression, during a training stage, according to embodiments.

Referring to FIG. 4C, the training apparatus 400C includes a weight updating component 480, a pruning component 485 and a weight updating component 490.

The goal is to learn the set of sparse encoding masks $\{M_{ij}^e\}$ and sparse decoding masks $\{M_{ij}^d\}$, each of the masks $M_{ij}^e$ and $M_{ij}^d$ targeting each hyperparameter $\lambda_i$. The PnG training framework is a progressive multi-stage training framework to achieve this goal.

In detail, assume that hyperparameters $\lambda_{1,\ldots,}$ $\lambda_N$ are ranked in a descending order, and correspond to masks that generate compressed representations with increasing distortion (decreasing quality) and decreasing rate loss. Assume that a current target is to train the masks targeting a hyperparameter $\lambda_{i+1}$, a current model instance has weights $\{W_j^e(\lambda_i)\},\{W_j^d(\lambda_i)\}$, and the masks are denoted $\{M_{ij}^e\},\{M_{ij}^d\}$. The goal is to obtain masks $\{M_{i+1j}^e\},\{M_{i+1j}^d\}$, as well as updated weights $\{W_j^e(\lambda_{i+1})\},\{W_j^d(\lambda_{i+1})\}$.

In a first step, weight coefficients among the weights $\{W_j^e(\lambda_i)\},\{W_j^d(\lambda_i)\}$ are masked by the masks $\{M_{ij}^e\},\{M_{ij}^d\}$, respectively. For example, if an entry in the mask $M_{ij}^e$ is 1, the corresponding weight $W_j^e(\lambda_i)$ will be fixed.

Then, the weight updating component 480 updates remaining unmasked weight coefficients among the weights $\{W_j^e(\lambda_i)\}$ and $\{W_j^d(\lambda_i)\}$ through regular backpropagation using R-D loss of Equation (1) targeting hyperparameters $\lambda_{i+1}$, into updated weights $\{\widetilde{W}_j^e(\lambda_i)\}$ and $\{\widetilde{W}_j^d(\lambda_i)\}$. Multiple epoch iterations will be taken to optimize the R-D loss in this weight update process, e.g., until reaching a maximum iteration number or until the loss converges.

After that, the pruning component 485 performs a weight pruning process. Any DNN weight pruning method such as an unstructured weight sparsification method [1] or a structured weight pruning method [2] can be used here.

A sparse regularization loss $S(\{W_j^e\}\{W_j^d\})$ may be added to the original R-D loss to obtain a total loss:

$$L(x, \bar{x}, \bar{y}) = D(x, \bar{x}) + \lambda R(\bar{y}) + \eta S(\{W_j^e\}\{W_j^d\}) \qquad (2)$$

Hyperparameter $\eta \geq 0$ balances an importance of the sparse regularization loss, which is usually predetermined. The sparse regularization loss aims at promoting a number of zero valued weight coefficients among the weights $\{W_j^e\}$ and $\{W_j^d\}$. For example, each layer can be processed individually:

$$S(\{W_j^e\}\{W_j^d\}) = \sum_j S(W_j^e) + \sum_j S(W_j^d) \qquad (3)$$

Each $S(W_j^e)/S(W_j^d)$ is the sparse loss defined over the weight tensor $W_j^e/W_j^d$. For example, a $(c_1, k_1, k_2, k_3, c_2)$-size weight tensor can be flattened into a vector of size $c_1 \times k_1 \times k_2 \times k_3 \times c_2$, and an $L_0$, $L_1$, $L_2$, or $L_{2,1}$ norm of the flattened vector can be computed as the sparse loss.

The weight pruning process includes two modules. First, in a pruning module, using the updated weights $\{\widetilde{W}_j^e(\lambda_i)\}$ and $\{\widetilde{W}_j^d(\lambda_i)\}$ as inputs, for unfixed weight coefficients among the updated weights $\{\widetilde{W}_j^e(\lambda_i)\}$ and $\{\widetilde{W}_j^d(\lambda_i)\}$, the pruning component 485 first selects weight coefficients that are unimportant (i.e., with a small loss if pruned). Then, the pruning component 485 fixes previously-fixed weights by the masks $\{M_{ij}^e\}, \{M_{ij}^d\}$, and the weight updating component 490 updates remaining weights among the updated weights $\{\widetilde{W}_j^e(\lambda_i)\}$ and $\{\widetilde{W}_j^d(\lambda_i)\}$ by normal backpropagation to optimize the total loss of Equation (2) targeting the hyperparameter $\lambda_{i+1}$. Multiple epoch iterations will be taken to optimize the total loss, e.g., until reaching a maximum iteration number or until the loss converges. The pruning component 485 finally outputs a set of binary pruning masks $\{P_{ij}^e\}$ and $\{P_{ij}^d\}$, where an entry in a mask $P_{ij}^e$ or $P_{ij}^d$ being 0 means a corresponding weight in $W_j^e$ or $W_j^d$ is set to zero (pruned).

Then, the weight updating component 490 fixes additional unfixed weights among the updated weights $\{\widetilde{W}_j^e(\lambda_i)\}$ and $\{\widetilde{W}_j^d(\lambda_i)\}$ that are masked by the masks $\{P_{ij}^e\}$ and $\{P_{ij}^d\}$, and updates remaining weights among the updated weights $\{\widetilde{W}_j^e(\lambda_i)\}$ and $\{\widetilde{W}_j^d(\lambda_i)\}$ that are not masked by either the masks $\{P_{ij}^e\}, \{P_{ij}^d\}$ or $\{M_{ij}^e\}, \{M_{ij}^d\}$, by regular backpropagation to optimize the overall R-D loss of Equation (1) targeting the hyperparameter $\lambda_{i+1}$. Multiple epoch iterations will be taken to optimize the R-D loss in this weight update process, e.g., until reaching a maximum iteration number or until the loss converges. Then, the weight updating component 490 computes corresponding masks $\{M_{i+1j}^e\}$ and $\{M_{i+1j}^d\}$ as: $M_{i+1j}^e = M_{ij}^e \cup P_{ij}^e$ and $M_{i+1j}^d = M_{ij}^d \cup P_{ij}^d$. That is, non-pruned entries in the mask $P_{ij}^e$ $(P_{ij}^d)$ that are non-masked in the mask $M_{ij}^e$ $(M_{ij}^d)$ will be additionally set to 1 as being masked in the mask $M_{i+1j}^e (M_{i+1j}^d)$. Also, the weight updating component 490 outputs updated weights $\{W_j^e(\lambda_{i+1})\}$ and $\{W_j^d(\lambda_{i+1})\}$. Final updated weights $\{W_j^e(\lambda_N)\}$ and $\{W_j^d(\lambda_N)\}$ are the final output weights $\{W_j^e\}$ and $\{W_j^d\}$ for the learned model instance.

Different patterns for binary masks can be enforced. For example, a binary mask can be structurally or unstructurally sparse. That is, zero entries can be distributed randomly or form some special pattern in a weight tensor. All layers in the DNN model may be required to have the same sparsity pattern. Each layer of the DNN model can also take a different sparsity pattern. The following gives three embodiments of the sparsity patterns.

Unstructured masks

A binary mask can have randomly distributed zero entries. This is called an unstructured mask. In such a case, unimportant weights are weights with very small values. For example, p% weight coefficients in a weight tensor with smallest values may be chosen to be pruned.

Structured masks

For a 5D weight tensor of size $(c_1, k_1, k_2, k_3, c_2)$, if the weight tensor is reshaped into a 3D cube of a shape $(c_1, c_2, k_1 \times k_2 \times k_3)$, an entire column (along $c_1$ axis), a row (along $c_2$ axis), and a channel (along $k_1 \times k_2 \times k_3$ axis) may be set to be zero. For example, a loss (e.g., $L_1$ or $L_2$ norm) of each column, row, or channel may be computed, and a bottom p% of columns, rows, or channels with smallest loss may be selected to be pruned.

Micro-structured masks

A 5D weight tensor of size $(c_1, k_1, k_2, k_3, c_2)$ may be reshaped into a 4D tensor, a 3D cube, a 2D matrix, or even a 1D vector. Instead of setting entire rows, columns, or channels along any reshaped axis to be zero, small micro-structured weights may be set to be zero, such as small 4D, 3D, 2D or 1D blocks. For example, a loss (e.g., L1 or L2 norm) of each micro-structure may be computed, and a bottom p% of micro-structures may be selected to be pruned.
Comparing the above three embodiments, the unstructured masks may have a least constraint on weight coefficients and can better preserve a compression performance. However, due to randomly distributed zero entries, this embodiment may not accelerate an inference computation. The structured masks can naturally reduce computation, but with a strong constraint on weight coefficients, and therefore, the structured masks hurt compression performance more. The micro-structured masks are a trade-off between the unstructured and structured masks, and a balance between preserving a compression performance and an inference acceleration depends on a specific design of micro-structures and a corresponding hardware computing device.

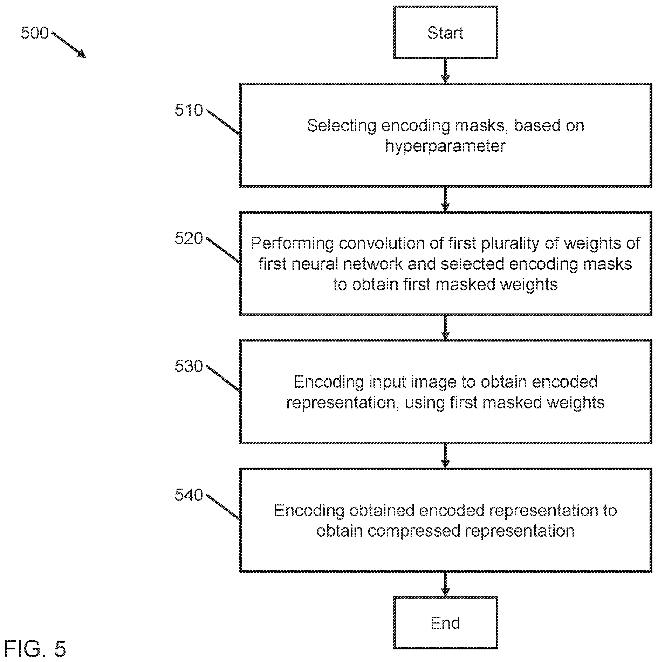

FIG. 5 is a flowchart of a method 500 of multi-rate neural image compression, according to embodiments.
In some implementations, one or more process blocks of FIG. 5 may be performed by the platform 120. In some implementations, one or more process blocks of FIG. 5 may be performed by another device or a group of devices separate from or including the platform 120, such as the user device 110.
As shown in FIG. 5, in operation 510, the method 500 includes selecting encoding masks, based on a hyperparameter.
In operation 520, the method 500 includes performing a convolution of a first plurality of weights of a first neural network and the selected encoding masks to obtain first masked weights.
In operation 530, the method 500 includes encoding an input image to obtain an encoded representation, using the first masked weights.
In operation 540, the method 500 includes encoding the obtained encoded representation to obtain a compressed representation.
Although FIG. 5 shows example blocks of the method 500, in some implementations, the method 500 may include additional blocks, fewer blocks, different blocks, or differently arranged blocks than those depicted in FIG. 5. Additionally, or alternatively, two or more of the blocks of the method 500 may be performed in parallel.

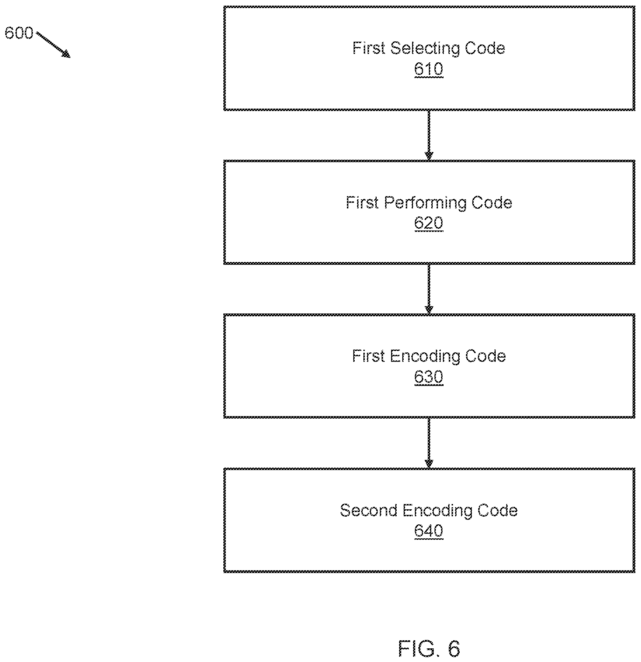

FIG. 6 is a block diagram of an apparatus 600 for multi-rate neural image compression, according to embodiments.
As shown in FIG. 6, the apparatus 600 includes first selecting code 610, first performing code 620, first encoding code 630 and second encoding code 640.
The first selecting code 610 is configured to cause at least one processor to select encoding masks, based on a hyperparameter.
The first performing code 620 is configured to cause the at least one processor to perform a convolution of a first plurality of weights of a first neural network and the selected encoding masks to obtain first masked weights.
The first encoding code 630 is configured to cause the at least one processor to encode an input image to obtain an encoded representation, using the first masked weights.
The second encoding code 640 is configured to cause the at least one processor to encode the obtained encoded representation to obtain a compressed representation.

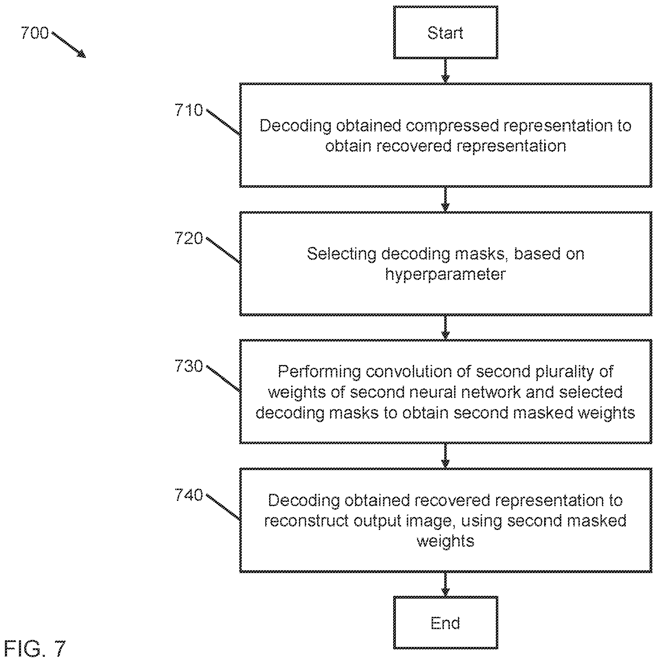

FIG. 7 is a flowchart of a method 700 of multi-rate neural image decompression, according to embodiments.

In some implementations, one or more process blocks of FIG. 7 may be performed by the platform 120. In some implementations, one or more process blocks of FIG. 7 may be performed by another device or a group of devices separate from or including the platform 120, such as the user device 110.

As shown in FIG. 7, in operation 710, the method 700 includes decoding the obtained compressed representation to obtain a recovered representation.

In operation 720, the method 700 includes selecting decoding masks, based on the hyperparameter.

In operation 730, the method 700 includes performing a convolution of a second plurality of weights of a second neural network and the selected decoding masks to obtain second masked weights.

In operation 740, the method 700 includes decoding the obtained recovered representation to reconstruct an output image, using the second masked weights.

Each of the encoding masks and the decoding masks may be partitioned into blocks, and each item in a respective one of the blocks may have a same binary value.

The first neural network and the second neural network may be trained by updating one or more of the first plurality of weights and the second plurality of weights that are not respectively masked by the encoding masks and the decoding masks, to minimize a rate-distortion loss that is determined based on the input image, the output image and the compressed representation, pruning the updated one or more of the first plurality of weights and the second plurality of weights not respectively masked by the encoding masks and the decoding masks, to obtain binary pruning masks indicating which of the first plurality of weights and the second plurality of weights are pruned, updating at least one of the first plurality of weights and the second plurality of weights that are not respectively masked by the encoding masks, the decoding masks and the obtained binary pruning masks, to minimize the rate-distortion loss, and updating the encoding masks and the decoding masks, based on the obtained binary pruning masks.

The pruning may include determining a pruning loss for each of the blocks into which each of the encoding masks and the decoding masks is partitioned, ranking the blocks in an ascending order, based on the determined pruning loss for each of the blocks, and setting two or more of the first plurality of weights and the second plurality of weights that corresponds to a plurality of the blocks that is top down among the ranked blocks until a stop criterion is reached.

Each of the encoding masks and the decoding masks may have a randomly distributed binary value.

Each of the encoding masks and the decoding masks may be partitioned into columns, rows or channels, and each item in a respective one of the columns, rows or channels may have a same binary value.

Although FIG. 7 shows example blocks of the method 700, in some implementations, the method 700 may include additional blocks, fewer blocks, different blocks, or differently arranged blocks than those depicted in FIG. 7. Additionally, or alternatively, two or more of the blocks of the method 700 may be performed in parallel.

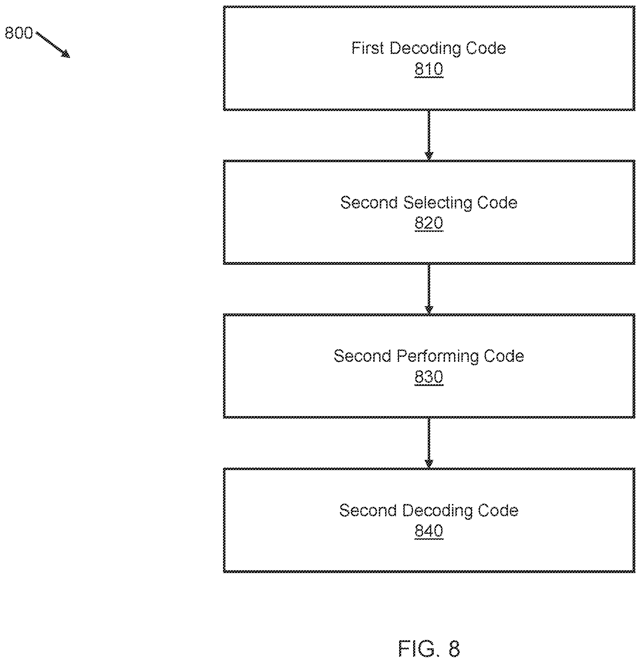

FIG. 8 is a block diagram of an apparatus 800 for multi-rate neural image decompression, according to embodiments.

As shown in FIG. 8, the apparatus 800 includes first decoding code 810, second selecting code 820, second performing code 830 and second decoding code 840.

The first decoding code 810 is configured to cause the at least one processor to decode the obtained compressed representation to obtain a recovered representation.

The second selecting code 820 is configured to cause the at least one processor to select decoding masks, based on the hyperparameter.

The second performing code 830 is configured to cause the at least one processor to perform a convolution of a second plurality of weights of a second neural network and the selected decoding masks to obtain second masked weights.

The second decoding code 840 is configured to cause the at least one processor to decode the obtained recovered representation to reconstruct an output image, using the second masked weights.

Each of the encoding masks and the decoding masks may be partitioned into blocks, and each item in a respective one of the blocks may have a same binary value.

The first neural network and the second neural network may be trained by updating one or more of the first plurality of weights and the second plurality of weights that are not respectively masked by the encoding masks and the decoding masks, to minimize a rate-distortion loss that is determined based on the input image, the output image and the compressed representation, pruning the updated one or more of the first plurality of weights and the second plurality of weights not respectively masked by the encoding masks and the decoding masks, to obtain binary pruning masks indicating which of the first plurality of weights and the second plurality of weights are pruned, updating at least one of the first plurality of weights and the second plurality of weights that are not respectively masked by the encoding masks, the decoding masks and the obtained binary pruning masks, to minimize the rate-distortion loss, and updating the encoding masks and the decoding masks, based on the obtained binary pruning masks.

The pruning may include determining a pruning loss for each of the blocks into which each of the encoding masks and the decoding masks is partitioned, ranking the blocks in an ascending order, based on the determined pruning loss for each of the blocks, and setting two or more of the first plurality of weights and the second plurality of weights that corresponds to a plurality of the blocks that is top down among the ranked blocks until a stop criterion is reached.

Each of the encoding masks and the decoding masks may have a randomly distributed binary value.

Each of the encoding masks and the decoding masks may be partitioned into columns, rows or channels, and each item in a respective one of the columns, rows or channels may have a same binary value.

Comparing with previous end-to-end (E2E) image compression methods, the embodiments described herein use only one model instance to achieve multi-rate compression effect with multiple binary masks. Two training frameworks may be used to learn the model instance and masks, which may have a block-wise micro-structure. Further, a prune-and-grow training framework may be to learn the model instance and general and flexible binary masks.

Comparing with the previous E2E image compression methods, the embodiments described herein may largely reduce deployment storage to achieve multi-rate compression, and use a flexible and general framework that accommodates various types of NIC models. The structured and micro-structured masks provide an additional benefit of computation reduction.

As used herein, the term component is intended to be broadly construed as hardware, firmware, or a combination of hardware and software.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

No element, act, or instruction used herein may be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

**Claims**

1. A method (500) of multi-rate neural image compression, the method being performed by at least one processor, and the method comprising:

   selecting (510) encoding masks, based on a hyperparameter;
   masking a first plurality of weights of a first neural network using the selected encoding masks to obtain first masked weights of the first neural network;
   encoding (530), by the neural network, an input image to obtain an encoded representation, using the first masked weights of the first neural network; and
   encoding (540) the obtained encoded representation to obtain a compressed representation,
   further comprising:

      decoding the obtained compressed representation to obtain a recovered representation;
      selecting decoding masks, based on the hyperparameter;
      masking a second plurality of weights of a second neural network using the selected decoding masks to obtain second masked weights; and
      decoding, by the second neural network, the obtained recovered representation to reconstruct the input image, using the second masked weights,
      wherein each of the encoding masks and the decoding masks is partitioned into blocks, and
      each item in a respective one of the blocks has a same binary value,
      wherein the first neural network and the second neural network are trained by:

         updating one or more of the first plurality of weights and the second plurality of weights that are not respectively masked by the encoding masks and the decoding masks, to minimize a rate-distortion loss that is determined based on the input image, the reconstructed input image and the compressed representation;
         pruning the updated one or more of the first plurality of weights and the second plurality of weights that are not respectively masked by the encoding masks and the decoding masks, to obtain binary pruning masks indicating which of the first plurality of weights and the second plurality of weights are pruned, wherein the pruning comprises:

determining a pruning loss for each of the blocks into which each of the encoding masks and the decoding masks is partitioned;
ranking the blocks in an ascending order, based on the determined pruning loss for each of the blocks; and
pruning the blocks top down until a stop criterion is reached by setting the weights in the pruned blocks as zero;
updating at least one of the first plurality of weights and the second plurality of weights that are not respectively masked by the encoding masks, the decoding masks and the obtained binary pruning masks, to minimize the rate-distortion loss; and
updating the encoding masks and the decoding masks, based on the obtained binary pruning masks.

2. The method of claim 1, wherein each of the encoding masks and the decoding masks has a randomly distributed binary value.

3. The method of claim 1, wherein each of the encoding masks and the decoding masks is partitioned into columns, rows or channels, and
each item in a respective one of the columns, rows or channels has a same binary value.

4. An apparatus for multi-rate neural image compression, the apparatus comprising:

at least one memory configured to store program code; and
at least one processor configured to read the program code and operate as instructed by the program code, the program code comprising:

first selecting code configured to cause the at least one processor to select encoding masks, based on a hyperparameter;
first performing code configured to cause the at least one processor to mask a first plurality of weights of a first neural network using the selected encoding masks to obtain first masked weights of the first neural network;
first encoding code configured to cause the at least one processor to encode an input image with the neural network to obtain an encoded representation, using the first masked weights; and
second encoding code configured to cause the at least one processor to encode the obtained encoded representation to obtain a compressed representation,

wherein the program code further comprises:

first decoding code configured to cause the at least one processor to decode the obtained compressed representation to obtain a recovered representation;
second selecting code configured to cause the at least one processor to select decoding masks, based on the hyperparameter;
second performing code configured to cause the at least one processor to mask a second plurality of weights of a second neural network using the selected decoding masks to obtain second masked weights; and
second decoding code configured to cause the at least one processor to decode, by the second neural network, the obtained recovered representation to reconstruct the input image, using the second masked weights,
wherein each of the encoding masks and the decoding masks is partitioned into blocks, and
each item in a respective one of the blocks has a same binary value,
wherein the program code further comprises code configured to cause the at least one processor to train the first neural network and the second neural network by:

updating, by the at least one processor, one or more of the first plurality of weights and the second plurality of weights that are not respectively masked by the encoding masks and the decoding masks, to minimize a rate-distortion loss that is determined based on the input image, the reconstructed input image and the compressed representation;

pruning, by the at least one processor,
the updated one or more of the first plurality of weights and the second plurality of weights that are not respectively masked by the encoding masks and the decoding masks, to obtain binary pruning masks indicating which of the first plurality of weights and the second plurality of weights are pruned, wherein the pruning comprises
determining, by the at least one processor,
a pruning loss for each of the blocks into which each of the encoding masks and the decoding masks is partitioned;
ranking, by the at least one processor,
the blocks in an ascending order, based on the determined pruning loss for each of the blocks; and
pruning, by the at least one processor,
the blocks top down until a stop criterion is reached by setting the weights in the pruned blocks as zero;
updating, by the at least one processor,
at least one of the first plurality of weights and the second plurality of weights that are not respectively masked by the encoding masks, the decoding masks and the obtained binary pruning masks, to minimize the rate-distortion loss; and
updating, by the at least one processor,
the encoding masks and the decoding masks, based on the obtained binary pruning masks.

5. The apparatus of claim 4, wherein each of the encoding masks and the decoding masks has a randomly distributed binary value.

6. The apparatus of claim 4, wherein each of the encoding masks and the decoding masks is partitioned into columns, rows or channels, and
each item in a respective one of the columns, rows or channels has a same binary value.

7. A non-transitory computer-readable medium storing instructions that, when executed by at least one processor for multi-rate neural image compression, cause the at least one processor to perform the method of any one of claims 1-3.

**Patentansprüche**

1. Verfahren (500) zur neuronalen Bildkompression mit mehreren Raten, wobei das Verfahren von mindestens einem Prozessor durchgeführt wird und das Verfahren umfasst:

Auswählen (510) von Kodiermasken auf der Grundlage eines Hyperparameters;
Maskieren einer ersten Vielzahl von Gewichten eines ersten neuronalen Netzes unter Verwendung der ausgewählten Kodiermasken zum Erhalten erster maskierter Gewichte des ersten neuronalen Netzes;
Kodieren (530), durch das neuronale Netz, eines Eingabebildes zum Erhalten einer kodierten Darstellung unter Verwendung der ersten maskierten Gewichte des ersten neuronalen Netzes; und
Kodieren (540) der erhaltenen kodierten Darstellung zum Erhalten einer komprimierte Darstellung,
ferner umfassend:

Dekodieren der erhaltenen komprimierten Darstellung zum Erhalten einer wiederhergestellten Darstellung;
Auswählen von Dekodiermasken auf der Grundlage des Hyperparameters;
Maskieren einer zweiten Vielzahl von Gewichten eines zweiten neuronalen Netzes unter Verwendung der ausgewählten Dekodiermasken zum Erhalten von zweiten maskierten Gewichten; und
Dekodieren, durch das zweite neuronale Netz, der erhaltenen wiederhergestellten Darstellung zum Rekonstruieren des Eingabebildes unter Verwendung der zweiten maskierten Gewichte,
wobei jede der Kodiermasken und der Dekodiermasken in Blöcke unterteilt ist, und
jedes Element in einem jeweiligen der Blöcke denselben Binärwert hat,
wobei das erste neuronale Netz und das zweite neuronale Netz durch folgende Vorgänge trainiert werden:

Aktualisieren einer oder mehrerer der ersten Vielzahl von Gewichten und der zweiten Vielzahl von Gewichten, die nicht durch die Kodiermasken bzw. die Dekodiermasken maskiert sind, zum Minimieren eines Ratenverzerrungsverlustes, der auf der Grundlage des Eingabebildes, des rekonstruierten Eingabebildes und der komprimierten Darstellung bestimmt wird;
Beschneiden der aktualisierten einen oder mehreren der ersten Vielzahl von Gewichten und der zweiten Vielzahl von Gewichten, die nicht durch die Kodiermasken bzw. die Dekodiermasken maskiert sind, zum Erhalten von binären Beschneidungsmasken, die angeben, welche der ersten Vielzahl von Gewichten und der zweiten Vielzahl von Gewichten beschnitten werden, wobei das Beschneiden umfasst:

Bestimmen eines Beschneidungsverlustes für jeden der Blöcke, in die jede der Kodiermasken und der Dekodiermasken unterteilt ist;

Reihen der Blöcke in einer aufsteigenden Reihenfolge auf der Grundlage des bestimmten Beschneidungsverlustes für jeden der Blöcke; und

Beschneiden der Blöcke von oben nach unten, bis ein Stoppkriterium erreicht ist, indem die Gewichte in den beschnittenen Blöcken auf null gesetzt werden;

Aktualisieren mindestens eines der ersten Vielzahl von Gewichten und der zweiten Vielzahl von Gewichten, die nicht durch die Kodiermasken, die Dekodiermasken bzw. die erhaltenen binären Beschneidungsmasken maskiert sind, zum Minimieren des Ratenverzerrungsverlustes; und

Aktualisieren der Kodiermasken und der Dekodiermasken auf der Grundlage der erhaltenen binären Beschneidungsmasken.

2. Verfahren nach Anspruch 1, wobei jede der Kodiermasken und der Dekodiermasken einen zufällig verteilten Binärwert hat.

3. Verfahren nach Anspruch 1, wobei jede der Kodiermasken und der Dekodiermasken in Spalten, Zeilen oder Kanäle unterteilt ist, und

jedes Element in einer jeweiligen der Spalten, der Zeilen oder der Kanäle denselben Binärwert hat.

4. Vorrichtung für neuronale Bildkompression mit mehreren Raten, wobei die Vorrichtung umfasst:

mindestens einen Speicher, der zum Speichern von Programmcode ausgelegt ist; und

mindestens einen Prozessor, der dafür ausgelegt ist, den Programmcode zu lesen und einen Betrieb entsprechend den Anweisungen des Programmcodes durchzuführen, wobei der Programmcode umfasst:

ersten Auswahlcode, der dafür ausgelegt ist, den mindestens einen Prozessor zu veranlassen, Kodiermasken auf der Grundlage eines Hyperparameters auszuwählen;

ersten Ausführungscode, der dafür ausgelegt ist, den mindestens einen Prozessor zu veranlassen, eine erste Vielzahl von Gewichten eines ersten neuronalen Netzes unter Verwendung der ausgewählten Kodiermasken zum Erhalten von ersten maskierten Gewichten des ersten neuronalen Netzes zu maskieren;

ersten Kodierungscode, der dafür ausgelegt ist, den mindestens einen Prozessor zu veranlassen, ein Eingabebild mit dem neuronalen Netz zum Erhalten einer kodierten Darstellung unter Verwendung der ersten maskierten Gewichte zu kodieren; und

zweiten Kodierungscode, der dafür ausgelegt ist, den mindestens einen Prozessor zu veranlassen, die erhaltene kodierte Darstellung zum Erhalten einer komprimierten Darstellung zu kodieren,

wobei der Programmcode ferner umfasst:

ersten Dekodierungscode, der dafür ausgelegt ist, den mindestens einen Prozessor zu veranlassen, die erhaltene komprimierte Darstellung zum Erhalten einer wiederhergestellten Darstellung zu dekodieren;

zweiten Auswahlcode, der dafür ausgelegt ist, den mindestens einen Prozessor zu veranlassen, Dekodiermasken auf der Grundlage des Hyperparameters auszuwählen;

zweiten Ausführungscode, der dafür ausgelegt ist, den mindestens einen Prozessor zu veranlassen, eine zweite Vielzahl von Gewichten eines zweiten neuronalen Netzes unter Verwendung der ausgewählten Dekodiermasken zum Erhalten von zweiten maskierten Gewichten zu maskieren; und

zweiten Dekodierungscode, der dafür ausgelegt ist, den mindestens einen Prozessor zu veranlassen, durch das zweite neuronale Netz die erhaltene wiederhergestellte Darstellung zum Rekonstruieren des Eingabebildes unter Verwendung der zweiten maskierten Gewichte zu dekodieren,

wobei jede der Kodiermasken und der Dekodiermasken in Blöcke unterteilt ist, und

jedes Element in einem jeweiligen der Blöcke denselben Binärwert hat,

wobei der Programmcode ferner Code umfasst, der dafür ausgelegt ist, den mindestens einen Prozessor zu veranlassen, das erste neuronale Netz und das zweite neuronale Netz durch folgende Vorgänge zu trainieren:

Aktualisieren, durch den mindestens einen Prozessor, einer oder mehrerer der ersten Vielzahl von Gewichten und der zweiten Vielzahl von Gewichten, die nicht durch die Kodiermasken bzw. die Dekodiermasken maskiert sind, zum Minimieren eines Ratenverzerrungsverlustes, der auf der Grundlage des Eingabebildes, des rekonstruierten Eingabebildes und der komprimierten Darstellung bestimmt wird;

Beschneiden, durch den mindestens einen Prozessor, der aktualisierten einen oder mehreren der ersten Vielzahl von Gewichten und der zweiten Vielzahl von Gewichten, die nicht durch die Kodiermasken bzw. die Dekodiermasken maskiert sind, zum Erhalten von binären Beschneidungsmasken, die angeben, welche der ersten Vielzahl von Gewichten und der zweiten Vielzahl von Gewichten beschnitten werden, wobei das Beschneiden umfasst:

Bestimmen, durch den mindestens einen Prozessor, eines Beschneidungsverlustes für jeden der Blöcke, in die jede der Kodiermasken und der Dekodiermasken unterteilt ist;

Reihen, durch den mindestens einen Prozessor, der Blöcke in einer aufsteigenden Reihenfolge auf der Grundlage des bestimmten Beschneidungsverlustes für jeden der Blöcke; und

Beschneiden, durch den mindestens einen Prozessor, der Blöcke von oben nach unten, bis ein Stoppkriterium erreicht ist, indem die Gewichte in den beschnittenen Blöcken auf null gesetzt werden;

Aktualisieren, durch den mindestens einen Prozessor, mindestens eines der ersten Vielzahl von Gewichten und der zweiten Vielzahl von Gewichten, die nicht durch die Kodiermasken, die Dekodiermasken bzw. die erhaltenen binären Beschneidungsmasken maskiert sind, zum Minimieren des Ratenverzerrungsverlustes; und

Aktualisieren, durch den mindestens einen Prozessor, der Kodiermasken und der Dekodiermasken auf der Grundlage der erhaltenen binären Beschneidungsmasken.

**5.** Vorrichtung nach Anspruch 4, wobei jede der Kodiermasken und der Dekodiermasken einen zufällig verteilten Binärwert hat.

**6.** Vorrichtung nach Anspruch 4, wobei jede der Kodiermasken und der Dekodiermasken in Spalten, Zeilen oder Kanäle unterteilt ist, und
jedes Element in einer jeweiligen der Spalten, der Zeilen oder der Kanäle denselben Binärwert hat.

**7.** Nichtflüchtiges, computerlesbares Medium, das Anweisungen speichert, die, wenn sie von mindestens einem Prozessor für neuronale Bildkompression mit mehreren Raten ausgeführt werden, den mindestens einen Prozessor veranlassen, das Verfahren nach einem der Ansprüche 1 bis 3 durchzuführen.

**Revendications**

**1.** Procédé (500) de compression d'images neuronales à taux multiples, le procédé étant réalisé par au moins un processeur, et le procédé comprenant :

la sélection (510) de masques d'encodage (510), en fonction d'un hyperparamètre ;
le masquage d'une première pluralité de poids d'un premier réseau neuronal à l'aide des masques d'encodage sélectionnés pour obtenir des premiers poids masqués du premier réseau neuronal ;
l'encodage (530), par le réseau neuronal, d'une image d'entrée pour obtenir une représentation codée, à l'aide des premiers poids masqués du premier réseau neuronal ; et
l'encodage (540) de la représentation codée obtenue pour obtenir une représentation compressée, comprenant en outre :

le décodage de la représentation compressée obtenue pour obtenir une représentation récupérée ;
la sélection de masques de décodage, en fonction de l'hyperparamètre ;
le masquage d'une seconde pluralité de poids d'un second réseau neuronal à l'aide des masques de décodage sélectionnés pour obtenir des seconds poids masqués ; et
le décodage, par le second réseau neuronal, de la représentation récupérée obtenue pour reconstruire l'image d'entrée, à l'aide des seconds poids masqués,
dans lequel chacun des masques d'encodage et des masques de décodage est partitionné en blocs, et
chaque élément d'un bloc respectif des blocs a la même valeur binaire,

dans lequel le premier réseau neuronal et le second réseau neuronal sont entraînés par :

la mise à jour d'un ou plusieurs poids de la première pluralité de poids et de la seconde pluralité de poids qui ne sont pas respectivement masqués par les masques d'encodage codage et les masques de décodage, afin de minimiser une perte de distorsion de taux déterminée en fonction de l'image d'entrée, de l'image d'entrée reconstruite et de la représentation compressée ;

l'élagage des un ou plusieurs poids mis à jour de la première pluralité de poids et de la seconde pluralité de poids qui ne sont pas respectivement masqués par les masques d'encodage et les masques de décodage, afin d'obtenir des masques d'élagage binaires indiquant ceux de la première pluralité de poids et de la seconde pluralité de poids qui sont élagués, dans lequel l'élagage comprend :

la détermination d'une perte d'élagage pour chacun des blocs dans lesquels chacun des masques d'encodage et des masques de décodage est partitionné ;

le classement des blocs dans un ordre croissant, en fonction de la perte d'élagage déterminée pour chacun des blocs ; et

l'élagage des blocs de haut en bas jusqu'à ce qu'un critère d'arrêt soit atteint en fixant les poids dans les blocs élagués à zéro ;

la mise à jour d'au moins un bloc de la première pluralité de poids et de la seconde pluralité de poids qui ne sont pas respectivement masqués par les masques d'encodage, les masques de décodage et les masques d'élagage binaires obtenus, afin de minimiser la perte de distorsion de taux ; et

la mise à jour des masques d'encodage et des masques de décodage, en fonction des masques d'élagage binaires obtenus.

2. Procédé selon la revendication 1, dans lequel chacun des masques de codage et les masques de décodage a une valeur binaire distribuée de manière aléatoire.

3. Procédé selon la revendication 1, dans lequel chacun des masques d'encodage et des masques de décodage est partitionné en colonnes, rangées ou canaux, et
chaque élément d'une colonne, d'une ligne ou d'un canal a la même valeur binaire.

4. Appareil de compression d'images neuronales à taux multiples, l'appareil comprenant :

au moins une mémoire configurée pour stocker un code de programme ; et
au moins un processeur configuré pour lire le code de programme et fonctionner comme il en est instruit par le code de programme, le code de programme comprenant :

un premier code de sélection configuré pour amener l'au moins un processeur à sélectionner des masques d'encodage, en fonction d'un hyperparamètre ;

un premier code de réalisation configuré pour amener l'au moins un processeur à masquer une première pluralité de poids d'un premier réseau neuronal à l'aide des masques de codage sélectionnés pour obtenir des premiers poids masqués du premier réseau neuronal ;

un premier code d'encodage configuré pour amener l'au moins un processeur à encoder une image d'entrée avec le réseau neuronal afin d'obtenir une représentation codée, à l'aide des premiers poids masqués ; et

un second code d'encodage configuré pour amener l'au moins un processeur à encoder la représentation codée obtenue afin d'obtenir une représentation compressée,

dans lequel le code de programme comprend en outre :

un premier code de décodage configuré pour amener l'au moins un processeur à décoder la représentation compressée obtenue afin d'obtenir une représentation récupérée ;

un second code de sélection configuré pour amener l'au moins un processeur à sélectionner des masques de décodage, en fonction de l'hyperparamètre ;

un second code d'exécution configuré pour amener l'au moins un processeur à masquer une seconde pluralité de poids d'un second réseau neuronal à l'aide des masques de décodage sélectionnés pour obtenir des seconds poids masqués ; et

un second code de décodage configuré pour amener l'au moins un processeur à décoder, par le second réseau neuronal, la représentation récupérée obtenue pour reconstruire l'image d'entrée, à l'aide des seconds poids masqués,

dans lequel chacun des masques d'encodage et des masques de décodage est partitionné en blocs, et chaque élément d'un bloc respectif des blocs a la même valeur binaire,

dans lequel le premier réseau neuronal et le second réseau neuronal sont entraînés par :

la mise à jour, par l'au moins un processeur, d'un ou plusieurs poids de la première pluralité de poids et de la seconde pluralité de poids qui ne sont pas respectivement masqués par les masques d'encodage et les masques de décodage, afin de minimiser une perte de distorsion de taux déterminée en fonction de l'image d'entrée, de l'image d'entrée reconstruite et de la représentation compressée ;

l'élagage, par l'au moins un processeur, des un ou plusieurs poids mis à jour de la première pluralité de poids et de la seconde pluralité de poids qui ne sont pas respectivement masqués par les masques d'encodage et les masques de décodage, afin d'obtenir des masques d'élagage binaires indiquant ceux de la première pluralité de poids et de la seconde pluralité de poids qui sont élagués, dans lequel l'élagage comprend :

la détermination, par l'au moins un processeur, d'une perte d'élagage pour chacun des blocs dans lesquels chacun des masques d'encodage et des masques de décodage est partitionné ;

le classement, par l'au moins un processeur, des blocs dans un ordre croissant, en fonction de la perte d'élagage déterminée pour chacun des blocs ; et

l'élagage, par l'au moins un processeur, des blocs de haut en bas jusqu'à ce qu'un critère d'arrêt soit atteint en fixant les poids dans les blocs élagués à zéro ;

la mise à jour, par l'au moins un processeur, d'au moins un bloc de la première pluralité de poids et de la seconde pluralité de poids qui ne sont pas respectivement masqués par les masques d'encodage, les masques de décodage et les masques d'élagage binaires obtenus, afin de minimiser la perte de distorsion de taux ; et

la mise à jour, par l'au moins un processeur, des masques d'encodage et des masques de décodage, en fonction des masques d'élagage binaires obtenus.

5. Appareil selon la revendication 4, dans lequel chacun des masques d'encodage et des masques de décodage a une valeur binaire distribuée de manière aléatoire.

6. Appareil selon la revendication 4, dans lequel chacun des masques d'encodage et les masques de décodage est partitionné en colonnes, rangées ou canaux, et chaque élément d'une colonne, rangée ou canal respectif a une même valeur binaire.

7. Support non transitoire lisible par ordinateur stockant des instructions qui, à leur exécution par au moins un processeur de compression d'images neuronales à taux multiples, amènent l'au moins un processeur à réaliser le procédé selon l'une quelconque des revendications 1 à 3.

FIG. 1

FIG. 2

EP 4 014 159 B1

FIG. 3

400A

Input: $\{W_j^e(\Lambda_i)\}$, $\{W_j^d(\Lambda_i)\}$

Weight Updating Component 410

$\{M_{ij}^e\}$, $\{M_{ij}^d\}$

$\{\widetilde{W}_j^e(\Lambda_i)\}$, $\{\widetilde{W}_j^d(\Lambda_i)\}$

Pruning Component 420

$\{P_{ij}^e\}$, $\{P_{ij}^d\}$

Weight Updating Component 430

$\{W_j^e(\Lambda_{i-1})\}$, $\{W_j^d(\Lambda_{i-1})\}$

$\{M_{i-1,j}^e\}$, $\{M_{i-1,j}^d\}$

FIG. 4A

400B

$\{W_j^e(0)\}$
$\{W_j^d(0)\}$

Weight Updating Component **440**

$\{\widetilde{W}_j^e(\lambda_1)\}$
$\{\widetilde{W}_j^d(\lambda_1)\}$

Pruning Component **450**

$\{P_{1j}^e\},...,\{P_{Nj}^e\}$
$\{P_{1j}^d\},...,\{P_{Nj}^d\}$

Weight Updating Component **460**

$\{\widetilde{W}_j^e(\lambda_N)\}$
$\{\widetilde{W}_j^d(\lambda_N)\}$

$\{M_{1j}^e\},...,\{M_{N-1j}^e\}$
$\{M_{1j}^d\},...,\{M_{N-1j}^d\}$

Inverse Pruning Weight Updating Component **470**

$\{W_j^e\}$
$\{W_j^d\}$

FIG. 4B

FIG. 4C

500 ⟋

```
           ┌─────────────┐
           │    Start    │
           └─────────────┘
                  │
                  ▼
    ┌──────────────────────────────────┐
510 │  Selecting encoding masks, based on │
    │         hyperparameter            │
    └──────────────────────────────────┘
                  │
                  ▼
    ┌──────────────────────────────────┐
520 │ Performing convolution of first plurality of weights of │
    │ first neural network and selected encoding masks │
    │        to obtain first masked weights        │
    └──────────────────────────────────┘
                  │
                  ▼
    ┌──────────────────────────────────┐
530 │  Encoding input image to obtain encoded │
    │  representation, using first masked weights │
    └──────────────────────────────────┘
                  │
                  ▼
    ┌──────────────────────────────────┐
540 │ Encoding obtained encoded representation to │
    │   obtain compressed representation   │
    └──────────────────────────────────┘
                  │
                  ▼
           ┌─────────────┐
           │     End     │
           └─────────────┘
```

FIG. 5

EP 4 014 159 B1

600

```
┌─────────────────────────────┐
│     First Selecting Code     │
│             610              │
└─────────────────────────────┘
              │
              ▼
┌─────────────────────────────┐
│     First Performing Code    │
│             620              │
└─────────────────────────────┘
              │
              ▼
┌─────────────────────────────┐
│     First Encoding Code      │
│             630              │
└─────────────────────────────┘
              │
              ▼
┌─────────────────────────────┐
│     Second Encoding Code     │
│             640              │
└─────────────────────────────┘
```

FIG. 6

700

```
┌─────────────┐
│    Start    │
└─────────────┘
       │
       ▼
┌──────────────────────────────────────────────┐
│  Decoding obtained compressed representation  │
│  to obtain recovered representation           │  710
└──────────────────────────────────────────────┘
       │
       ▼
┌──────────────────────────────────────────────┐
│  Selecting decoding masks, based on           │
│  hyperparameter                               │  720
└──────────────────────────────────────────────┘
       │
       ▼
┌──────────────────────────────────────────────┐
│  Performing convolution of second plurality   │
│  of weights of second neural network and      │  730
│  selected decoding masks to obtain second     │
│  masked weights                               │
└──────────────────────────────────────────────┘
       │
       ▼
┌──────────────────────────────────────────────┐
│  Decoding obtained recovered representation   │
│  to reconstruct output image, using second    │  740
│  masked weights                               │
└──────────────────────────────────────────────┘
       │
       ▼
┌─────────────┐
│     End     │
└─────────────┘
```

FIG. 7

800

```
┌─────────────────────────────────┐
│                                 │
│       First Decoding Code       │
│              810                │
│                                 │
└─────────────────────────────────┘
                │
                ▼
┌─────────────────────────────────┐
│                                 │
│      Second Selecting Code      │
│              820                │
│                                 │
└─────────────────────────────────┘
                │
                ▼
┌─────────────────────────────────┐
│                                 │
│     Second Performing Code      │
│              830                │
│                                 │
└─────────────────────────────────┘
                │
                ▼
┌─────────────────────────────────┐
│                                 │
│      Second Decoding Code       │
│              840                │
│                                 │
└─────────────────────────────────┘
```

FIG. 8

## REFERENCES CITED IN THE DESCRIPTION

**Patent documents cited in the description**

- US 24287421
- US 63045341
- US 63087519

**Non-patent literature cited in the description**

- **DAVID ALEXANDRE et al.** An autoencoder-based learned image compressor: description of challenge proposal by NCTU. *arXiv.org,* 20 February 2019
- Structured weight unification and encoding for neural network compression and acceleration. **JIANG WEI et al.** 2020 IEEE/CVF Conference on computer vision and pattern recognition workshops (CVPRW). IEEE, 14 June 2020, 3068-3076